(19) Europäisches Patentamt / European Patent Office / Office européen des brevets

(11) **EP 2 728 909 A1**

(12) **DEMANDE DE BREVET EUROPEEN**

(43) Date de publication:
**07.05.2014 Bulletin 2014/19**

(21) Numéro de dépôt: **13189610.2**

(22) Date de dépôt: **22.10.2013**

(51) Int Cl.:
*H04W 4/00* (2009.01)　　　*H04W 28/16* (2009.01)
*H04W 16/00* (2009.01)　　　*H04W 16/14* (2009.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.10.2012 FR 1260380**

(71) Demandeur: **Orange**
**75015 Paris (FR)**

(72) Inventeurs:
• **Kountouris, Apostolos**
**38000 Grenoble (FR)**
• **Miscopein, Benoît**
**38000 Grenoble (FR)**
• **Schwoerer, Jean**
**38000 Grenoble (FR)**

(54) **Procédé d' obtention d'échantillons numerises de signaux radio, procédé de traitement d' une requête de recherche d'échantillons, procédé de traitement de signaux radio, dispositifs et équipements associés**

(57) L'invention concerne un procédé d'obtention d'échantillons numérisés à partir de signaux radio reçus sur une bande spectrale déterminée par une pluralité d'équipements de réception connectés à un réseau de communication et partageant un référentiel spatial, temporel et fréquentiel commun, ledit procédé étant caractérisé en ce qu'il comprend les étapes suivantes :
- émission (REQ) d'un message de requête de recherche d'échantillons à destination d'un serveur d'interrogation d'une base de données dudit réseau, ladite base étant apte à stocker une pluralité d'échantillons numérisés transmis par ladite pluralité d'équipements de communication à ladite base de données, un échantillon numérisé étant indexé par au moins un index de temps, un index de localisation géographique et un index de fréquence comprenant au moins une fréquence de réception du signal radio, ladite requête comprenant au moins des critères de recherche de premier niveau, comprenant au moins un critère de temps, un critère de localisation géographique et un critère de fréquence temporel;
- réception (REC) d'un message de réponse à ladite requête, comprenant les échantillons numérisés dont les index associés satisfont les critères de recherche de ladite la requête.

**FIG. 1**

**Description**

**1. <u>Domaine de l'invention</u>**

Le domaine de l'invention est celui des communications par voie radio, plus particulièrement de l'obtention de signaux radio reçus sur une bande de fréquence sans licence, par des équipements de réception déployés dans une zone géographique donnée.

L'invention s'applique plus particulièrement à la collecte de données transmises par un réseau de capteurs ou M2M (pour « *machine to machine* », en anglais), et à l'infrastructure de collecte déployée pour mettre en oeuvre un service M2M sur des bandes de fréquence sans licence.

Aujourd'hui, un fournisseur de service M2M doit posséder une infrastructure de collecte dédiée pour traiter les données de mesure transmises par voie radio par des noeuds capteurs. Une fois traitées, ces données sont retransmises à un client avec lequel le fournisseur a signé un accord commercial.

On distingue principalement deux types d'infrastructure pour les réseaux M2M :

Selon un premier type d'infrastructure, l'infrastructure de collecte se compose d'équipements radio fixes, appelés aussi passerelles, qui sont connectés aux capteurs localisés sous leur zone de couverture. Chaque passerelle est également reliée par une connexion d'un réseau public, par exemple 3G DSL ou fibre à un serveur distant. Lorsqu'elle reçoit un signal émis par un noeud capteur, une passerelle démodule le signal radio et extrait le paquet de données qu'il contient. Elle envoie ensuite le paquet de données extrait au serveur distant qui le traite et transmet l'information qu'il contient (par exemple un indice de consommation d'eau) au système d'information métier du client.

Selon un deuxième type d'infrastructure, les passerelles utilisées ont une capacité de traitement très réduite et limitée à une démodulation partielle de signaux de données radio reçus. Une telle passerelle transmet donc au serveur un flux de données que ce dernier devra trier pour isoler les paquets qu'il contient et en extraire l'information, avant de l'envoyer au système d'information métier du client.

**3. <u>Inconvénients de l'art antérieur</u>**

Le déploiement des infrastructures précédemment décrites représente pour le fournisseur de services un coût considérable pour un retour sur investissement incertain.

En outre, lorsqu'une bande libre est fortement utilisée par des équipements d'une infrastructure concurrente, le fournisseur de service n'a pas moyen de savoir a priori si la bande est occupée et il peut rencontrer des difficultés pour assurer un niveau de qualité de service satisfaisant pour ses clients.

**4. <u>Objectifs de l'invention</u>**

L'invention a notamment pour objectif de pallier ces inconvénients de l'art antérieur.

Plus précisément, un objectif de l'invention est de proposer une solution permettant d'obtenir les signaux radio transmis au cours d'une période de temps, une zone géographique et une bande de fréquences données, pour un investissement réduit.

L'invention a aussi pour objectif de proposer une solution permettant d'évaluer l'occupation d'une bande de fréquences.

L'invention a également pour objectif de proposer une solution permettant à un fournisseur de services d'obtenir les données de mesure collectées par une pluralité de capteurs disposés dans une zone géographique donnée, sans avoir à investir dans une infrastructure de réseau de collecte coûteuse.

**5. <u>Exposé de l'invention</u>**

Ces objectifs, ainsi que d'autres qui apparaîtront par la suite, sont atteints à l'aide d'un procédé d'obtention d'échantillons numérisés de signaux radio reçus par une pluralité d'équipements de réception radio connectés à un réseau de communication et partageant un référentiel spatial, temporel et fréquentiel commun.

Selon l'invention, un tel procédé est remarquable en ce qu'il comprend les étapes suivantes :

-   émission d'un message de requête de recherche d'échantillons à destination d'un serveur d'interrogation d'une base de données dudit réseau, ladite base étant apte à stocker une pluralité d'échantillons numérisés transmis par ladite pluralité d'équipements de communication à ladite base de données, un échantillon numérisé étant indexé par au moins un index de temps, un index de localisation géographique et un index de fréquence, ladite requête comprenant au moins des critères de recherche de premier niveau, lesdits critères comprenant au moins un critère de temps, un critère de localisation géographique et un critère de fréquence;
-   réception d'un message de réponse à ladite requête, comprenant les échantillons numérisés dont les index associés satisfont les critères de recherche de ladite la requête.

Avec l'invention, un équipement terminal obtient, sous forme d'échantillons numérisés bruts, les signaux radio reçus par les équipements de réception radio sur une bande spectrale donnée, en formulant une simple requête de recherche d'échantillons auprès d'un serveur d'interrogation d'une base de données. Cette base stocke les échantillons numérisés que les équipements de réception radio lui ont transmis. Ces échantillons sont indexés en temps, en lieu et en fréquence.

La requête de recherche comprend des critères de recherches sur les index associés aux échantillons, ce qui permet d'identifier les échantillons dont les index satisfont ses critères de recherche.

Avantageusement, l'index de temps est représentatif d'au moins un instant de réception du signal radio à partir duquel l'échantillon a été obtenu, l'index de localisation est représentatif d'au moins une position géographique de l'équipement de réception dudit signal radio et l'index de fréquence est représentatif de la bande de fréquences dudit signal radio numérisée par l'équipement de réception dans ledit référentiel spatial, temporel et fréquentiel commun.

Avec l'invention, il n'est plus nécessaire de déployer sa propre infrastructure de réception radio pour obtenir les signaux radio transmis sur une bande de fréquences libres et dans une zone géographique donnée. L'invention propose au contraire une approche tout-à-fait nouvelle et inventive de mutualisation d'une infrastructure de collecte de signaux radio qui consiste à stocker de façon centralisée les signaux radio reçus en continu par l'infrastructure de réception radio mutualisée et de les rendre accessible par l'intermédiaire d'un moteur de recherche.

Cette nouvelle approche consiste donc à réaliser en continu une numérisation d'un spectre radio d'une bande de fréquences et de la mettre à disposition d'équipements terminaux. Elle permet non seulement d'obtenir à moindre coût l'intégralité des signaux radio reçus dans une zone géographique, sur une période de temps donnée et sur une bande de fréquence donnée. Il peut s'agir de signaux porteurs de données utiles telles que par exemple les données de mesures physiques collectées et remontées par une pluralité de capteurs d'un fournisseur de services M2M. Ce fournisseur de services M2M n'a donc plus qu'à déployer ses capteurs de données de mesure et de formuler des requêtes adaptées au moteur de recherche, afin de collecter l'ensemble des signaux radio porteurs des données utiles remontées par ses capteurs.

L'invention permet aussi d'obtenir une connaissance de tous les signaux radio reçus, qu'ils soient porteurs de bruit ou de données utiles. Elle est donc aussi tout-à-fait adaptée à la mesure d'occupation d'une bande radio.

Avec l'invention, un fournisseur de services M2M sera donc à la fois en mesure de développer un projet de services à moindre coût et de prédire le niveau de qualité de service qu'il pourra offrir à ses clients.

Selon un aspect de l'invention, le message de requête transmis au serveur d'interrogation comprend en outre au moins un critère de recherche de deuxième niveau, destiné à déclencher la mise en oeuvre d'une sélection par le serveur d'interrogation, en fonction dudit au moins un deuxième critère, des échantillons numérisés obtenus à partir des critères de recherche de premier niveau, et le message de réponse reçu comprend les échantillons sélectionnés.

Contrairement aux critères de recherche de premier niveau, les critères de recherche de deuxième niveau ne correspondent pas directement aux index à partir desquels la base de données est structurée. Il n'est donc pas possible d'accéder directement aux échantillons satisfaisant de tels critères. En revanche, un avantage des critères de recherche de deuxième niveau est qu'ils sont plus élaborés et entraînent une sélection plus fine des échantillons numérisés dans la base de données. Ceci permet aussi d'économiser les ressources de bande passante et de calcul, en évitant la transmission d'échantillons inutiles et la mise en oeuvre d'une sélection par l'équipement terminal sur l'ensemble d'échantillons reçus.

Selon un autre aspect de l'invention, le message de requête transmis au serveur d'interrogation comprend en outre au moins une commande de prétraitement, destinée à déclencher la mise en oeuvre par le serveur d'interrogation d'au moins un prétraitement des échantillons numérisés obtenus à partir des critères de recherche de la requête et/ou sélectionnés et le message de réponse reçu comprend les échantillons prétraités.

Un avantage est que l'équipement terminal profite des ressources de calcul du serveur pour lui commander l'application de prétraitements adaptés aux échantillons numérisés qu'il a requis. Il n'a ainsi pas besoin d'investir localement dans ses propres ressources de calcul.

De façon avantageuse, le procédé d'obtention qui vient d'être présenté selon ses différents modes de réalisation peut être mis en oeuvre par un dispositif d'obtention d'échantillons numérisés selon l'invention.

L'invention concerne donc aussi un dispositif d'obtention d'échantillons numérisés de signaux radio reçus par une pluralité d'équipements de communication déployés sur une zone géographique.

Un tel dispositif est remarquable en ce qu'il comprend les modules suivants :

- émission d'un message de requête de recherche desdits signaux radio dans une base de données dudit réseau, apte à stocker une pluralité d'échantillons numérisés, obtenus par ladite pluralité d'équipements de communication à partir de signaux radio reçus sur une bande spectrale déterminée et transmis à ladite base de données, un échantillon numérisé étant indexé par au moins un index de temps et un index de localisation géographique et un index de fréquence, ladite requête comprenant au moins des critères de recherche de premier niveau des échantillons recherchés parmi lesquels au moins un critère de temps, un critère de localisation géographique et un critère de fréquence;
- réception d'un message de réponse à ladite requête, comprenant les échantillons numérisés dont les index associés satisfont lesdits critères.

Avantageusement, un tel dispositif peut être intégré à un équipement terminal d'un utilisateur.

L'invention concerne donc aussi un équipement terminal d'utilisateur, apte à se connecter à un réseau de communication comprenant une pluralité d'équipements de communication déployés sur une zone géographique et aptes à recevoir des signaux radio. Un tel équipement terminal est remarquable en ce qu'il comprend un dispositif d'obtention d'échantillons numérisés selon l'invention.

L'invention concerne aussi un procédé de traitement d'une requête de recherche de signaux radio reçus par une pluralité d'équipements de réception radio connectés à un réseau de communication et partageant un référentiel spatial, temporel et fréquentiel commun, ladite requête étant reçue d'un équipement terminal connecté audit réseau.

Un tel procédé est remarquable en ce qu'il comprend les étapes suivantes :

- réception d'un message de requête de recherche d'échantillons desdits signaux, ladite requête comprenant au moins des critères de recherche de premier niveau, lesdits critères comprenant au moins un critère de temps, un critère de localisation géographique et un critère de fréquence;
- interrogation à partir desdits critères de premier niveau d'une base de données apte à stocker une pluralité d'échantillons numérisés obtenus par ladite pluralité d'équipements de communication à partir de signaux radio reçus sur une bande spectrale prédéterminée et stockés dans ladite base de données, un échantillon numérisé étant indexé par au moins un index de temps, un index de localisation géographique et un index de fréquence;
- obtention d'un ensemble d'échantillons satisfaisant au moins lesdits critères de recherche de premier niveau; et
- émission d'un message de réponse comprenant au moins un sous-ensemble dudit ensemble d'échantillons obtenu audit équipement terminal.

Selon un aspect de l'invention, le critère de temps comprend une condition temporelle de début de période et une condition temporelle de fin de période et le procédé comprend une étape de vérification desdites conditions destinée à déclencher l'étape d'interrogation dès que la condition temporelle de début est satisfaite et tant que la condition temporelle de fin de période n'est pas satisfaite.

Un avantage est que le procédé est aussi bien capable de traiter les requêtes portant sur une période passée que sur une période future. Bien sûr, pour ce qui est du passé, la réponse comprendra les échantillons stockés satisfaisant la requête dans la limite de profondeur de mémoire de la base de données. Pour ce qui est du futur, si la condition temporelle de fin de période est indéfinie, ce qui correspond à un critère de « temps continu », l'interrogation sera déclenchée de façon répétée jusqu'à ce que l'utilisateur de l'équipement terminal mette explicitement fin à sa requête.

Pourvu que la fréquence des interrogations soit suffisante, l'équipement terminal pourra donc recevoir en quasi temps réel le flux des échantillons reçus qui valident les conditions de la requête. Un compromis entre délai et ressources devra être fait en fonction de l'application visée.

Selon un autre aspect de l'invention, ladite requête comprend en outre au moins un critère de recherche de deuxième niveau, ledit procédé comprend une étape de sélection d'un sous-ensemble de l'ensemble d'échantillons obtenu à partir des critères de recherche de premier niveau, en fonction dudit critère de recherche de deuxième niveau et le message de réponse émis comprend ledit sous-ensemble d'échantillons sélectionnés.

Un avantage de ces critères de deuxième niveau est de permettre une sélection plus fine des échantillons et donc de limiter le volume de données transmis à l'équipement terminal.

Selon un autre aspect de l'invention, ledit au moins un critère de recherche de deuxième niveau comprend au moins une sous-bande de ladite au moins une bande spectrale numérisée par la pluralité d'équipements de réception et l'étape de sélection consiste à appliquer une convolution réalisant un filtrage de échantillons obtenus à partir des critères de premier niveau et correspondant à ladite au moins une sous-bande.

Un avantage est de permettre la sélection d'une ou plusieurs sous-bandes dans la bande spectrale numérisée par la pluralité d'équipements de réception. L'équipement terminal obtient donc directement du serveur d'interrogation les échantillons numérisés de la ou des sous-bandes d'intérêt.

Selon encore un autre aspect de l'invention, ledit au moins un critère de recherche de deuxième niveau spécifie au moins une signature électromagnétique, l'étape de sélection comprend une sous-étape de corrélation d'une séquence des échantillons obtenus à partir des critères de recherche de premier niveau avec une séquence d'échantillons de référence représentative de ladite signature, destinée à fournir un taux de corrélation des échantillons et une sous-étape de comparaison du taux de corrélation fourni avec un seuil de corrélation prédéterminé.

Cette signature électromagnétique correspond à une séquence d'échantillons de référence formée par la modulation en mode numérique d'un train de bits selon une forme d'onde prédéterminée. L'étape de sélection permet d'identifier les échantillons qui portent cette signature électromagnétique. Seuls les échantillons ainsi sélectionnés sont transmis dans le message de réponse. A titre d'exemple, il est ainsi possible de faire porter une même signature électromagnétique aux échantillons numérisés correspondant à des données issues de capteurs gérées par un même fournisseur de services M2M. Un avantage pour l'équipement terminal de ce fournisseur de services M2M est qu'il peut spécifier cette signature électromagnétique dans sa requête.

Selon un autre aspect de l'invention, ladite requête comprend en outre un identifiant de l'équipement terminal émetteur, ledit procédé comprend en outre une étape de contrôle d'accès destinée à contrôler que ledit identifiant est autorisé à accéder aux échantillons présentant ladite signature électromagnétique.

Un avantage est que seuls les équipements terminaux « ayant-droit » accèdent aux échantillons numérisés. Les autres équipements terminaux voient leur requête de recherche rejetée. Ce contrôle d'accès garantit la sécurité du système et des échantillons numérisés qu'il stocke dans la base de données.

Selon un autre aspect de l'invention, ladite requête comprend en outre une commande de prétraitement, comprenant des instructions de programme écrites dans un langage exécutable, ledit procédé comprend une étape de prétraitement de l'ensemble d'échantillons obtenus à partir des critères de recherche, ladite étape étant destinée à exécuter lesdites instructions de programme.

Un avantage est que l'utilisateur de l'équipement terminal peut ainsi spécifier une succession d'opérations de prétraitement à appliquer aux échantillons obtenus par la requête et obtenir directement du serveur d'interrogation des échantillons prétraités sans avoir à investir lui-même dans des ressources de calculs.

De façon avantageuse, le procédé de traitement d'une requête de recherche qui vient d'être présenté selon ses différents modes de réalisation peut être mis en oeuvre par un dispositif de traitement d'une requête de recherche d'échantillons numérisés selon l'invention.

L'invention concerne donc aussi un dispositif traitement d'une requête de recherche d'échantillons numérisés de signaux radio reçus sur une bande spectrale déterminée par une pluralité d'équipements de réception d'un réseau de communication, ladite requête étant reçue d'un équipement terminal connecté audit réseau.

Un tel procédé est remarquable en ce qu'il comprend les étapes suivantes :

- réception d'un message de requête de recherche d'échantillons desdits signaux, ladite requête comprenant au moins des critères de recherche de premier niveau des échantillons recherchés comprenant au moins un critère de temps, un critère de localisation géographique et un critère de fréquence;
- interrogation d'une base de données apte à stocker une pluralité d'échantillons transmis par la pluralité d'équipements de communication, un échantillon stocké étant associé à des index comprenant au moins un index de temps, un index de localisation géographique et un index de fréquence ;
- obtention d'un ensemble d'échantillons stockés satisfaisant lesdits critères de recherche de premier niveau, et
- émission d'un message de réponse comprenant au moins un sous-ensemble dudit ensemble d'échantillons audit équipement terminal audit équipement terminal.

Avantageusement, un tel dispositif peut être intégré à un serveur d'interrogation de la base de données stockant les échantillons numérisés.

L'invention concerne donc aussi un serveur d'interrogation d'une base de données d'un réseau de communication, comprenant une pluralité d'équipements de réception radio.

Un tel serveur d'interrogation est remarquable en ce qu'il comprend un dispositif de traitement d'une requête de recherche de signaux radio selon l'invention.

L'invention concerne aussi un procédé de traitement d'un signal radio reçu par un équipement de réception radio apte à recevoir des signaux radio sur une bande spectrale déterminée, ledit équipement étant connecté à un réseau de communication. Un tel procédé est remarquable en ce qu'il comprend les étapes suivantes :

- Conversion du signal radio reçu à un instant de réception en échantillons numérisés ;
- Indexation des échantillons numérisés en associant à un échantillon au moins un index de temps représentatif dudit instant de réception, un index de localisation géographique représentatif d'une position géographique de l'équipement de réception et un index de fréquence représentatif de ladite bande spectrale ;
- Stockage des échantillons indexés dans une base de données dudit réseau.

De façon avantageuse, le procédé de traitement qui vient d'être présenté peut être mis en oeuvre par un dispositif de traitement de signaux radio reçu par un équipement de réception selon l'invention. Un tel dispositif est remarquable en ce qu'il comprend les modules suivants :

- Conversion du signal reçu en une suite d'échantillons numérisés ;
- Indexation des échantillons de la suite par association d'index comprenant au moins un index de temps, un index de localisation géographique et un index de fréquence ;
- Transmission des échantillons indexés en vue de leur stockage dans une base de données.

Avantageusement, un tel dispositif peut être intégré à un équipement de réception de signaux radio.

L'invention concerne donc aussi un équipement de réception, apte à recevoir un signal radio sur une bande spectrale déterminée. Un tel équipement est remarquable en ce qu'il comprend un dispositif de traitement d'un signal radio selon l'invention.

L'invention concerne aussi une base de données d'un réseau de communication comprenant une pluralité d'équipements de communication radio. Une telle base de données est remarquable en ce qu'elle comprend :

- un module de stockage d'une pluralité d'échantillons numérisés obtenus à partir de signaux radio reçus sur une bande spectrale déterminée et transmis à ladite base de données par ladite pluralité d'équipements de communication, un échantillon numérisé étant indexé par au moins un index de temps et un index de localisation géographique et un index de fréquence, et
- un module de traitement d'une requête de recherche d'échantillons comprenant au moins des critères de recherche de premier niveau des échantillons recherchés comprenant au moins un critère de temps, un critère de localisation géographique et un critère de fréquence, apte à fournir un ensemble d'échantillons satisfaisant lesdits critères en réponse à ladite requête.

L'invention concerne également un système d'obtention d'échantillons numérisés de signaux radio reçus dans une zone géographique par une pluralité de d'équipements de réception selon l'invention, un serveur d'interrogation d'une base de données selon l'invention, une base de données selon l'invention et au moins un équipement terminal selon l'invention.

L'invention vise également un programme d'ordinateur comportant des instructions pour l'exécution des étapes du procédé d'obtention précité lorsque ledit programme est exécuté par un ordinateur, un programme d'ordinateur comportant des instructions pour l'exécution des étapes du procédé de traitement d'une requête précité lorsque ledit programme est exécuté par un ordinateur et un programme d'ordinateur comportant des instructions pour l'exécution des étapes du procédé de traitement de signaux radio précité lorsque ledit programme est exécuté par un ordinateur

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi des supports d'enregistrement ou supports d'informations lisibles par un ordinateur, et comportant des instructions des programmes d'ordinateur tels que mentionnés ci-dessus.

Les supports d'enregistrement mentionnés ci-avant peuvent être n'importe quelle entité ou dispositif capable de stocker le programme. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à des circuits intégrés dans lequel les programme sont incorporés, les circuits étant adaptés pour exécuter ou pour être utilisés dans l'exécution des procédés en question.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure 1 présente de façon schématique un système d'obtention d'échantillons numérisés à partir de signaux radio selon l'invention ;
- la figure 2 présente de façon schématique un exemple de structure d'un équipement de réception selon l'invention ;
- la figure 3 présente de façon schématique les étapes du procédé d'obtention d'échantillons numérisés selon l'invention ;
- la figure 4 présente de façon schématique les étapes du procédé de traitement d'une requête de recherche d'échantillons selon l'invention ;
- la figure 5 présente de façon schématique les étapes du procédé de traitement d'un signal radio reçu selon l'invention ;
- la figure 6 présente de façon schématique la structure simplifiée d'un équipement terminal selon l'invention ;
- la figure 7 présente de façon schématique la structure simplifiée d'un serveur d'interrogation selon l'invention ;
- la figure 8 présente de façon schématique la structure simplifiée d'un équipement de réception selon l'invention ;
- la figure 9 présente de façon schématique les relations entre les différents acteurs M2M pour la mise en oeuvre d'un service de télémesure selon l'invention ; et
- la figure 10 présente un exemple de mise en oeuvre d'un service de télémesure selon un premier mode de réalisation de l'invention.

## 7. Description d'un mode de réalisation particulier de l'invention

Le principe général de l'invention repose sur un moteur de recherche spectral, permettant d'obtenir, en réponse à une requête comprenant au moins des critères de temps, de localisation et de fréquence, des échantillons numérisés de signaux radio reçus pendant la période de temps correspondant au critère de temps, sur le territoire correspondant au critère de localisation et dans la bande de fréquence correspondant au critère de fréquence spécifiés dans la requête.

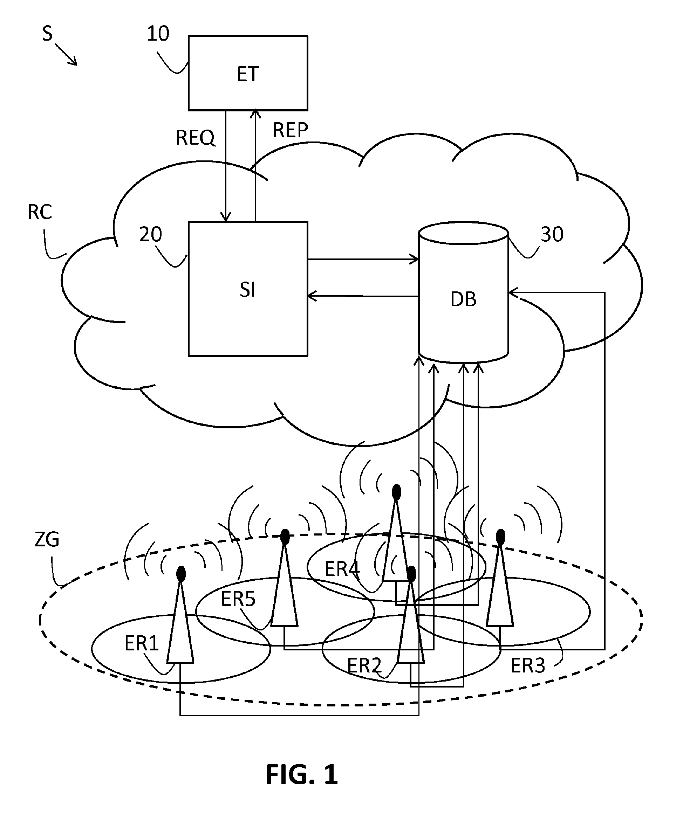

En relation avec la **Figure 1,** on considère un système S d'obtention de tels échantillons selon l'invention. Le système S comprend, déployés sur une zone géographique ZG donnée ou territoire, une pluralité de sites de réception S1 à SN, comprenant chacun un équipement de réception radio $ER_1$, ..., $ER_N$ avec N entier non nul.. Chaque équipement ER est implanté à une position géographique $(x_i, y_i)$ de la zone ZG, cette position étant exprimée à l'aide de coordonnées spatiales d'un référentiel de localisation spatial commun à tous les équipements. Il est aussi synchronisé en temps et en fréquence avec les autres équipements de réception ERi. Chaque équipement est agencé pour recevoir en continu des signaux radio sur une bande de fréquences donnée, pour numériser les signaux reçus sous forme d'échantillons et pour les indexer en fonction du temps, du lieu et de la fréquence de réception. Selon l'invention, la pluralité d'équipements de réception radio forme un système de numérisation du spectre à l'échelle de la zone géographique.

La pluralité d'équipements de réceptions $ER_1$ à $ER_N$ est connectée à un réseau de communication RC, par exemple un réseau de communications IP ou un réseau de communications mobiles. Chaque équipement $ER_i$ est agencé pour transmettre, via ce réseau RC, des trames $Fr_i$ de L échantillons à une base de données BD 30.

La base de données BD est adaptée pour stocker les échantillons reçus en association avec leurs index spatial, temporel et fréquentiel. Elle est donc structurée pour permettre l'accès aux échantillons stockés en spécifiant des critères spatial, temporel et fréquentiel.

Le système S comprend aussi un serveur d'interrogation SI de la base de données, connecté au réseau de communication RC. Un tel serveur est agencé pour traiter des requêtes d'obtention d'échantillons qui lui sont adressés par des équipements terminaux ET connectés au réseau R. Une requête de recherche d'échantillons spécifie au moins un critère spatial, un critère temporel et un critère fréquentiel. Le serveur SI traite une telle requête en interrogeant la base de données BD sur la base des critères spécifiés. Il obtient en réponse des échantillons numérisés qu'il retransmet au moins en partie à l'équipement terminal ET requérant.

Le serveur d'interrogation SI et la base de données BD forment donc un moteur de recherche spectral, qui permet à un équipement terminal ET d'obtenir les échantillons de signaux radio échangés sur une bande de fréquences sur un territoire et pendant une période de temps donnés.

Le système S selon l'invention peut être mis en oeuvre dans des conditions variées. Les équipements de réception ER peuvent être fixes ou mobiles, pourvu qu'ils partagent un référentiel spatial, temporel et fréquentiel commun. Ils sont donc synchronisés temporellement.

La bande de fréquences numérisée peut aussi bien être libre que faire l'objet d'une licence.

Le système S comprend en outre au moins un équipement terminal ET, apte à se connecter au réseau de communication RC et à émettre par l'intermédiaire de ce réseau une requête d'obtention d'échantillons numérisés auprès du serveur d'interrogation SI. Cet équipement ET peut être de type varié, tel qu'un ordinateur, un terminal mobile, une tablette etc. De façon avantageuse, plusieurs équipements terminaux ET peuvent émettre leur propre requête d'obtention d'échantillons numérisés auprès du serveur d'interrogation, chaque requête spécifiant des critères de recherche adaptés aux besoins de l'équipement terminal requérant. L'infrastructure de numérisation et le moteur de recherche spectral selon l'invention sont donc mutualisés.

Le système S selon l'invention peut être avantageusement mis en oeuvre pour le déploiement de différents types de services, dont certains seront présentés en détails plus avant.

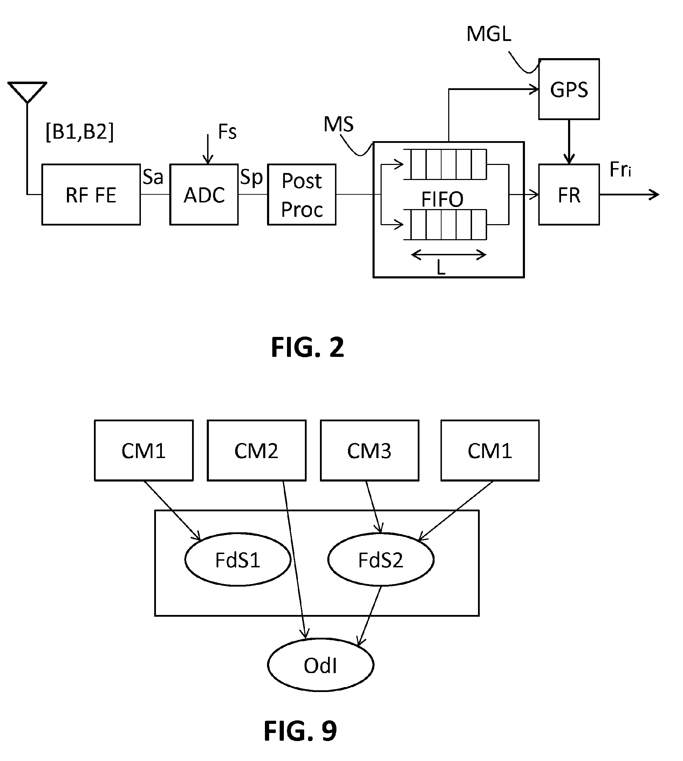

En relation avec la **Figure 2,** on présente un exemple de structure d'un équipement de réception radio ERi selon un mode de réalisation de l'invention. Un tel équipement comprend une antenne AT apte à recevoir des signaux radio sur une bande spectrale [B1, B2], B1 et B2 étant les fréquences minimale et maximale de la bande, un module Radio Fréquences Front End, FE aptes à détecter un signal analogique Sa et un module ADC de conversion Analogique Numérique apte à convertir ledit signal Sa en échantillons Sp.

Plusieurs variantes existent dans l'art antérieur pour l'ensemble formé par l'antenne AT, le module FE et le module ADC. Une architecture de type superhétérodyne en bande de base ou en low-IF (pour « *Low Intermediate Frequency* », en anglais), ou par conversion directe avec ensuite un échantillonnage en bande de base. L'échantillonnage en IF est aussi une option avec une conversion directe par sous-échantillonnage (via l'aliasing) ou en numérique via un DDC (pour « *Digital to Digital Converter* », en anglais).

A la sortie du module ADC, on obtient des échantillons en bande de base à un rythme ou fréquence d'échantillonnage Fs qui satisfait un critère de Nyquist Fs = OF. 2B avec OF entier supérieur ou égal à 1. OF est le facteur de sur échantillonnage (OR pour « *Oversampling Factor* », en anglais). Chaque échantillon Sp est représenté sur w bits, avec w entier non nul, par exemple égal à 8, 12, 16 ou 32 bits.

L'équipement de réception ERi comprend en outre un module de stockage des échantillons de L places, avec L entier non nul. La longueur L correspond à une fenêtre temporelle de L.1/Fs secondes. Avantageusement, le module de stockage ST comprend une mémoire de type FIFO (pour « *First In First Out* », en anglais).

Avantageusement l'équipement ERi comprend en outre un module de géo localisation, par exemple de type GPS (pour « *Global Positioning System* », en anglais), apte à fournir à la demande des coordonnées de localisation temporelle (instant) et spatiale de l'équipement. A chaque remplissage de la mémoire FIFO, l'information temporelle correspondant à la réception du premier échantillon est récupéré du module GPS. Il s'agit par exemple d'une information comprenant la date jour heure min seconde de réception de ce premier échantillon.

Si l'équipement de réception ERi est mobile, les informations de localisation temporelle et spatiale sont avantageusement obtenues n fois pour une trame $Fr_i$ de L échantillons, donc tous les m échantillons avec L = n.m. Lorsque l'équipement de réception est fixe, ce module de géo localisation peut être simplement remplacé par un module de synchronisation temporelle, apte à récupérer un index temporel du réseau de communication. En effet, dans ce deuxième cas, la position (xi, yi) de l'équipement ne change pas et peut être obtenue une fois pour toutes, par exemple lors de l'installation de l'équipement sur son site.

Lorsque la mémoire FIFO est pleine, une trame d'échantillons Fr est préparée. Elle comprend au moins un identifiant de l'équipement de réception qui l'a traitée, l'index temporel récupéré, suivi des L échantillons.

On notera que l'index temporel des autres échantillons peut facilement être déduit de celui du premier, la fréquence d'échantillonnage Fs étant connue.

Selon un premier aspect, on considère que tous les équipements de réception ERi mettent en oeuvre les mêmes modules et disposent des mêmes paramétrages de ces modules, notamment des mêmes valeurs de bande spectrale B, de fréquence d'échantillonnage Fs, de profondeur de bits w par échantillon etc. Ces paramètres n'ont donc pas à être transmis dans les trames d'échantillons destinées à la base de données.

Selon un deuxième aspect, on affecte à chaque équipement un paramétrage qui lui est propre et bien adapté à son environnement. Dans ce cas, il est nécessaire d'insérer les valeurs des paramètres des modules dans les trames d'échantillons. Par exemple, si tous les équipements ne numérisent pas la même bande de fréquences, alors la spécification de la bande numérisée doit être insérée dans l'en-tête de la trame d'échantillons numérisés.

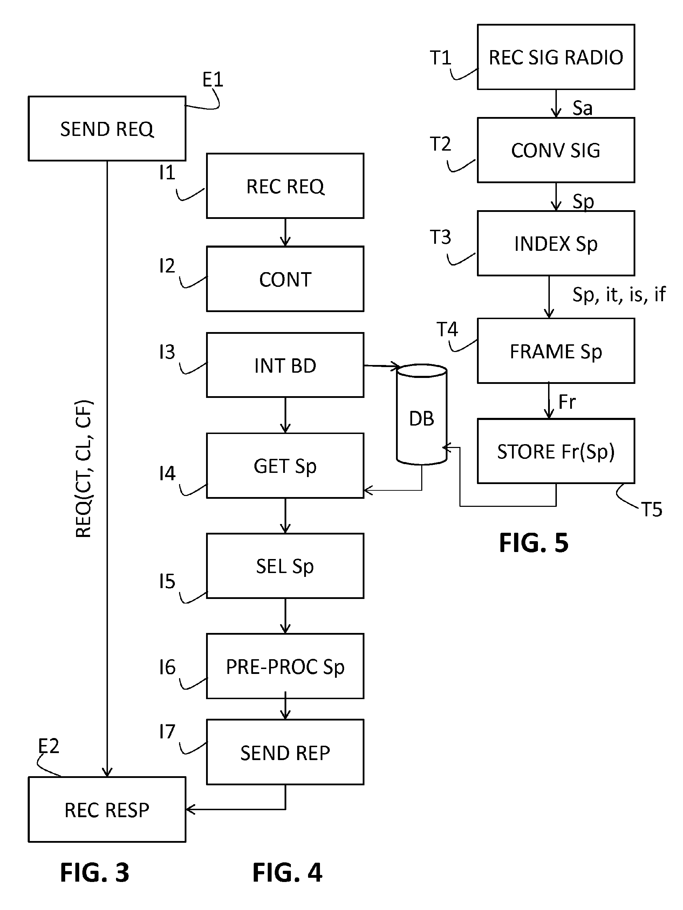

En relation avec la **Figure 3,** on présente maintenant les étapes du procédé d'obtention d'échantillons numérisés d'un signal radio selon un mode de réalisation de l'invention. Au cours d'une première étape E1, une requête Req d'obtention d'échantillons est émise en provenance d'un équipement terminal ET et à destination du serveur d'interrogations SI. La requête Req spécifie des critères de recherche. Ces critères de recherche comprennent au moins des critères de premier niveau, parmi lesquels on trouve :

- un critère spatial, précisant une zone de localisation des échantillons recherchés, par exemple sous la forme d'un couple de coordonnées spatiales (x, y) dans le référentiel commun du système S, et un rayon r ;
- un critère temporel, précisant une période temporelle, passée, présente ou future de numérisation des échantillons par les équipements de réception ;
- un critère spectral, précisant une bande de fréquences de réception des échantillons recherchés.

Ces critères de premier niveau correspondent aux index des échantillons numérisés, à partir desquels la base de données est structurée. Il est donc possible d'accéder directement aux échantillons stockés dont les index satisfont les critères de la requête.

Selon un aspect de l'invention, la requête comprend en outre des critères de recherche de deuxième niveau. Ces critères ne correspondent pas à des index stockés en association avec les échantillons numérisés. Ils visent à obtenir une sélection plus fine des échantillons. Ils nécessitent d'appliquer un prétraitement aux échantillons satisfaisant les critères de premier niveau.

Selon un autre aspect de l'invention, la requête comprend aussi des critères de traitement des échantillons. Ces critères spécifient un prétraitement à appliquer aux échantillons satisfaisant les critères de recherche, avant de les inclure dans le message de réponse Rep.

On présente maintenant en relation avec la **Figure 4,** les étapes du procédé de traitement d'une requête selon un mode de réalisation de l'invention. Ce procédé est avantageusement mis en oeuvre par le serveur d'interrogation SI, sur réception d'une requête Req en provenance d'un équipement ET, au cours d'une étape I1.

En I2, une requête d'interrogation comprenant les critères de recherche de premier niveau est envoyée à la base de données BDD. En I4, un message de réponse est reçu comprenant un ensemble d'échantillons Sp satisfaisant les critères de premier niveau. En I5, une sélection d'échantillons dans l'ensemble d'échantillons Sp est effectuée pour répondre à des critères de deuxième niveau, le cas échéant.

A titre d'exemple, un critère de deuxième niveau peut spécifier une ou plusieurs sous-bandes de la bande de fréquences spécifiée dans le critère spectral de premier niveau. Dans ce cas, l'étape de sélection consiste à effectuer une opération de convolution pour réaliser un filtrage sur les échantillons Sp de l'ensemble satisfaisant les critères de premier niveau.

Un autre critère de deuxième niveau peut spécifier une séquence temporelle d'échantillons de référence, représentative d'une signature électromagnétique des échantillons recherchés. Dans ce cas, l'étape de sélection consiste à réaliser une corrélation temporelle des échantillons de l'ensemble obtenu avec ladite séquence de référence et à comparer le taux de corrélation calculé avec un seuil de corrélation prédéterminé. Seuls les échantillons pour lesquels le taux de corrélation calculé est supérieur au seuil sont retenus et transmis à l'équipement terminal ET requérant dans le message de réponse Rep, en I7. Cette sélection permet de ne récupérer que les échantillons numérisés ayant une signature électromagnétique donnée. Un fournisseur de services M2M peut ainsi décider de « tagger » les échantillons issus des signaux radio provenant de ses capteurs en imposant aux capteurs une forme d'onde bien particulière pour transmettre les données de mesure qu'ils ont relevées ou bien en insérant dans l'échantillon, en marge des données, une signalisation particulière. Ainsi, il est assuré de ne récupérer que les échantillons qui proviennent de son parc de capteurs.

Avantageusement, si la requête Req comprend une commande de prétraitement, une étape I6 de prétraitement est mise en oeuvre en vue d'appliquer aux échantillons satisfaisant les critères de recherche (de premier et de deuxième niveau) le prétraitement requis. Selon un aspect de l'invention, cette commande de prétraitement spécifie une suite d'opérations de prétraitement à appliquer aux échantillons, telle que la suite formée d'une démodulation numérique des signaux, un désentrelacement et un décodage des bits reçus, par exemple sous la forme d'une suite d'instructions exprimée dans un langage exécutable par un processeur.

Les échantillons ainsi prétraités sont ensuite insérés dans le message de réponse Req et transmis à l'équipement terminal ET.

On notera que, selon la valeur du critère de recherche temporel, la séquence des étapes qui vient d'être décrite, peut être :

- soit mise en oeuvre dès réception de la requête Req et une fois pour toutes, dans le cas où le critère de recherche temporel indique une période de temps passée ;
- soit mise en oeuvre de manière différée par rapport à l'instant de réception de la requête Req, lorsque la période de temps indiquée est une période future ;
- soit encore mise en oeuvre dès réception de la requête Req et répétée régulièrement, de façon à couvrir une période de temps passée et future.

On comprend plus généralement que le critère temporel peut comprendre des conditions temporelles de début et de fin que le procédé de traitement de la requête vérifie. L'interrogation de la base de données est déclenchée lorsque la condition temporelle de début est satisfaite et tant que la condition temporelle de fin ne l'est pas.

Dans ce dernier cas, la requête Req peut être considérée comme une requête dynamique, à laquelle le procédé de traitement selon l'invention apporte une réponse plus ou moins continue, en fonction d'une fréquence d'envoi des messages de réponse à l'équipement terminal ET.

Selon un aspect de l'invention, le procédé de traitement met en oeuvre une étape I2 de contrôle d'accès destinée à vérifier, au moins à partir d'une signature électromagnétique comprise dans un critère de recherche de deuxième niveau de la requête que l'équipement terminal ET requérant est autorisé à accéder aux échantillons portant cette signature.

En relation avec la **Figure 5,** on présente maintenant les étapes du procédé de traitement de réception d'un signal radio selon un mode de réalisation de l'invention. Un tel procédé est destiné à être mis en oeuvre par un équipement de réception $ER_1$ à $ER_N$.

Un signal radio analogique Sa est reçu au cours d'une étape T1. Cette étape est mise en oeuvre par l'antenne A et par le module RF Front End présentés en relation avec la **Figure 2.** En T2, il est converti en une séquence d'échantillons avec une fréquence d'échantillonnage Fs prédéterminée. En T3, les échantillons Sp obtenus sont associés à un index temporel, représentatif de leur instant de réception , un index de localisation représentatif du lieu de leur réception et correspondant à la position géographique de l'équipement de réception ERi qui les traite et un index spectral correspondant à une fréquence de réception de l'échantillon.

Au cours d'une étape T4, les échantillons indexés sont stockés dans leur ordre de réception dans un module de stockage MS, en vue de leur prochain envoi dans un message de réponse au message d'interrogation reçu du serveur d'interrogation SI. Comme évoqué précédemment, cette étape de stockage peut avantageusement consister à remplir une mémoire de type FIFO avec une séquence de L échantillons, avec par exemple L=1024.

Au cours d'une étape T5, les échantillons stockés sont organisés en une trame Tr qui est transmise en T6 au serveur d'interrogation dans le réseau de communication. Bien sûr, selon le protocole de communication utilisé pour le transport de la trame de d'échantillons, celle-ci pourra être découpée en plusieurs paquets de données, comme c'est le cas par exemple avec le protocole TCP/IP.

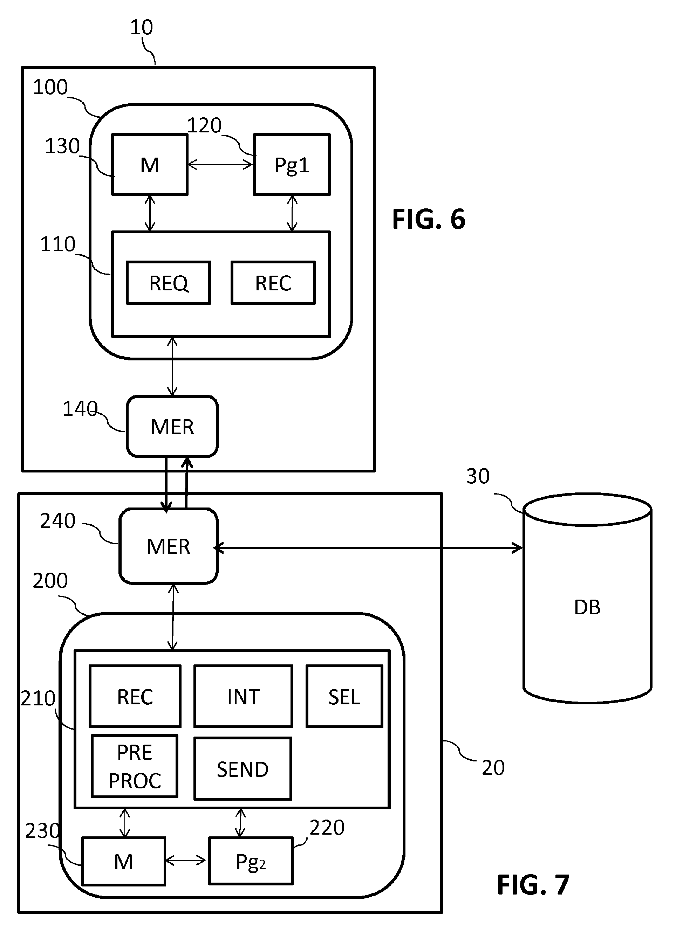

En relation avec les Figures **6** et **7,** on considère maintenant les structures simplifiées d'un dispositif 100 d'obtention d'échantillons et d'un dispositif 200 de traitement d'une requête de recherche d'échantillons selon un exemple de réalisation de l'invention. Le dispositif de communication 100 met en oeuvre le procédé d'obtention d'échantillons numérisés de signaux radio selon l'invention tel que décrit ci-dessus. Le dispositif de traitement d'une requête met en oeuvre le procédé de traitement d'une requête selon l'invention tel que décrit ci-dessus.

Par exemple, le dispositif 100 comprend une unité de traitement 110, équipée par exemple d'un processeur P1, et pilotée par un programme d'ordinateur $Pg_1$ 120, stocké dans une mémoire 130 et mettant en oeuvre le procédé d'obtention d'échantillons selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en oeuvre les étapes du procédé d'obtention d'échantillons décrit précédemment, selon les instructions du programme d'ordinateur 120.

Le dispositif 100 comprend une unité REQ de transmission d'une requête de recherche d'échantillons numérisés et une unité de réception REC d'un message de réponse à ladite requête.

Selon l'invention, le dispositif 100 d'obtention d'échantillons est donc agencé pour coopérer avec un module d'émission/réception MER 140 de l'équipement terminal ET 10. En particulier l'unité REQ est apte à lui commander l'émission du message de requête REQ dans le réseau de communication RC et l'unité REP est apte à traiter les messages de réponse reçus par le module MER 140.. Les unités REQ et REC sont pilotées par le processeur P1 de l'unité de traitement 110.

Avantageusement, le dispositif d'obtention d'échantillons 100 est intégré dans un équipement terminal ET. Selon une variante, il pourrait être intégré à un module indépendant, connecté au terminal ET.

Par exemple, le dispositif 200 comprend une unité de traitement 210, équipée par exemple d'un processeur P2, et pilotée par un programme d'ordinateur Pg₂ 220, stocké dans une mémoire 230 et mettant en oeuvre le procédé de traitement d'une requête selon l'invention.

A l'initialisation, les instructions de code du programme d'ordinateur Pg₂ 220 sont par exemple chargées dans une mémoire RAM avant d'être exécutées par le processeur de l'unité de traitement 210. Le processeur P2 de l'unité de traitement 210 met en oeuvre les étapes du procédé de traitement d'une requête décrit précédemment, selon les instructions du programme d'ordinateur 220.

Selon l'invention, le dispositif de gestion 200 comprend une unité REC de réception d'une requête REQ en provenance de l'équipement terminal ET, une unité d'interrogation INT de la base de données BDD 30 à partir des critères de recherche de premier niveau extraits de la requête, une unité de transmission des échantillons obtenus au module d'émission/réception MER 240. Avantageusement, le dispositif comprend en outre une unité de sélection SEL des échantillons obtenus en fonction de critères de deuxième niveau extraits de la requête, une unité de prétraitement PRE-PROC des échantillons sélectionnés en fonction de critères de prétraitement extraits de la requête. Les échantillons prétraités sont alors transmis à une unité SEND agencée pour coopérer avec un module MER 240 d'émission/réception pour envoi dans le réseau de communication RC à l'équipement terminal ET 10.

Ces unités sont pilotées par le processeur P2 de l'unité de traitement 210.

Selon un mode de réalisation de l'invention, le dispositif 200 est intégré dans un serveur d'interrogation SI.

Selon un autre mode de réalisation de l'invention, le dispositif de gestion 200 est intégré dans un module indépendant, connecté au serveur d'interrogation SI.

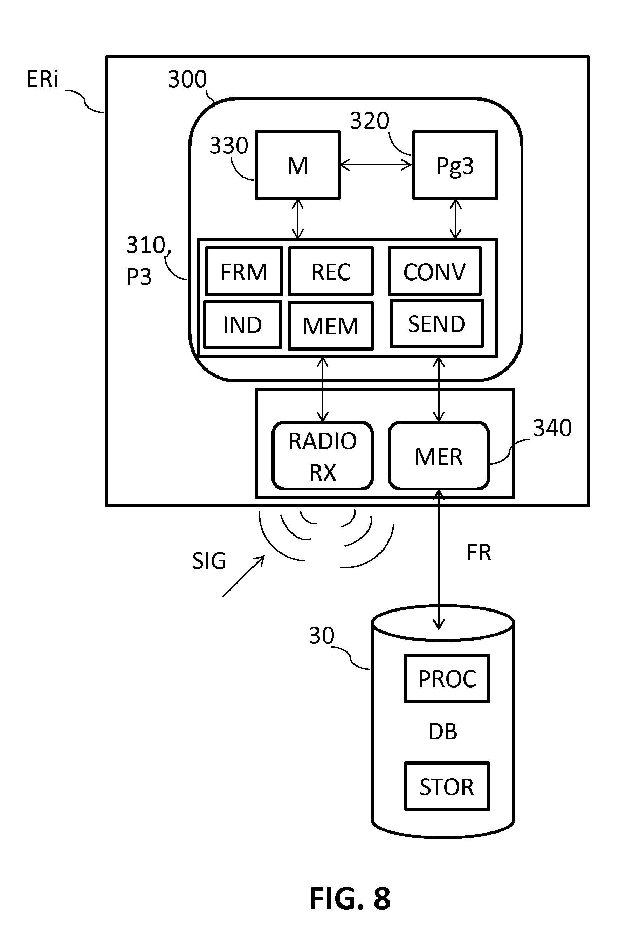

En relation avec la Figure **8**, on considère maintenant la structure simplifiée d'un dispositif 300 de traitement d'un signal radio selon l'invention. Le dispositif de traitement d'une requête met en oeuvre le procédé de traitement d'un signal radio tel que décrit ci-dessus.

Par exemple, le dispositif 300 comprend une unité de traitement 310, équipée par exemple d'un processeur P3, et pilotée par un programme d'ordinateur Pg₃ 320, stocké dans une mémoire 330 et mettant en oeuvre le procédé de traitement selon l'invention.

A l'initialisation, les instructions de code du programme d'ordinateur Pg₃ 320 sont par exemple chargées dans une mémoire RAM avant d'être exécutées par le processeur de l'unité de traitement 310. Le processeur de l'unité de traitement 310 met en oeuvre les étapes du procédé de traitement d'un signal radio décrit précédemment, selon les instructions du programme d'ordinateur 320.

Le dispositif 300 comprend une unité REC de réception d'un signal radio, une unité CONV de conversion du signal radio analogique reçu en une séquence d'échantillons numériques, une unité IND d'indexation des échantillons numérisés, une unité MEM de stockage de la séquence obtenue et une unité SEND d'envoi de la séquence d'échantillons à une unité de transmission SEND agencée pour coopérer avec un module MER 340 d'émission/réception pour envoi dans le réseau de communication RC à la base de données BD.

Selon un aspect de l'invention, le dispositif comprend en outre une unité FRM de mise en trames de la séquence d'échantillons avant son traitement par l'unité SEND.

Les unités précités sont pilotées par le processeur P3 de l'unité de traitement 310.

La base de données BD 30 selon l'invention est agencée pour stocker les échantillons numérisés en association avec leurs index temporel, spatial et fréquentiel et pour permettre l'accès aux échantillons stockés à partir d'une instance de ces index. Elle comprend un module PROC de traitement des requêtes et un module STOR de stockage des échantillons. Dans ce module, elle est apte à stocker les échantillons numérisés qu'elle reçoit des équipements de réception radio ER1 à ERN de telle manière qu'on puisse y accéder à partir de leur index temporel, spatial et/ou fréquentiel.

On constate que les procédés, dispositifs et système décrits ci-dessus permettent à un équipement terminal ET d'obtenir du moteur de recherche formé par le serveur d'interrogation SI et par la base de données BDD les échantillons numérisés des signaux radio reçues dans une bande de fréquence données, sur un territoire ZG donné, et pendant une période de temps données, sans avoir à investir individuellement dans une infrastructure de collecte dédiée. Au contraire, l'infrastructure constituée des équipements de réception ERi, de la base de données et du serveur d'interrogation SI sont mutualisées pour répondre aux requêtes des équipements terminaux ET.

Différents types de services peuvent être avantageusement déployés sur la base du système qui vient d'être décrit. Trois exemples d'application de l'invention vont maintenant être présentés.

### Déploiement d'un service de télémesure

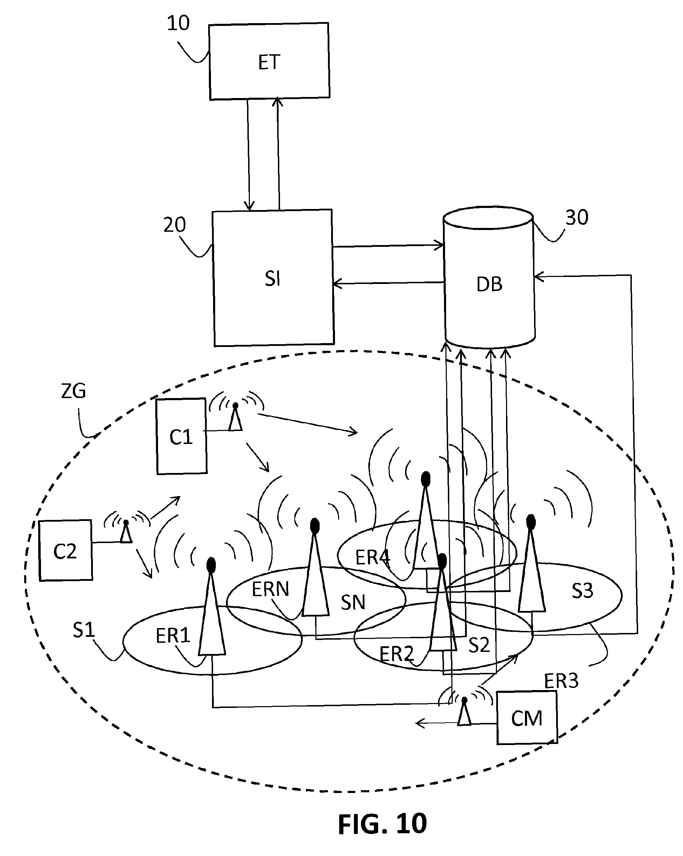

En relation avec les **Figures 9 et 10,** on présente un exemple de mise en oeuvre d'un service de télémesure basé sur un système d'obtention d'échantillons numérisés selon l'invention.

En relation avec la **Figure 9,** des clients métiers M2M CM1 à CM4 ont pour mission d'exploiter des mesures de grandeurs physiques relevées par des capteurs déployés sur une zone géographique donnée. On considère que ces clients métiers sous-traitent à des fournisseurs de service FdS1 et FdS2 la tâche de communiquer avec les capteurs pour la collecte des mesures et de maintenir le parc de capteurs.

Selon l'invention, un opérateur d'infrastructure Odl prend en charge la réception des signaux radio et la numérisation du spectre à grande échelle. Pour ce faire, il déploie une infrastructure formée de sites de réception S1 à SN localisés en des positions (xi, yi) d'un référentiel commun, chaque site comprenant au moins un équipement de réception, respectivement ER1 à ERN, du serveur d'interrogation et de la base de données, dont il met une interface à disposition des fournisseurs de service FdS et des clients métiers. Bien sûr, un acteur peut assumer plusieurs rôles. Par exemple, le client métier peut assumer aussi le rôle de fournisseur de services. Dans la suite de cet exemple, on considère que ce sont les fournisseurs de services qui interagissent avec le moteur de recherche spectral selon l'invention.

En relation avec la **Figure 10,** les capteurs C1 à CM sont déployés sur une zone géographique ZG par un client métier CM pour mesurer une grandeur physique telle qu'une consommation d'eau, d'électricité ou de gaz. Ces capteurs sont équipés d'un module de communication radio utilisant une bande spectrale donnée, par exemple la bande sans licence 863-870 MHz, 0,1% dc, 25 mW.

Une fois déployés, les capteurs effectuent des mesures de grandeurs physiques et diffusent les mesures qu'ils ont collectées par voie radio selon un protocole de communication connu de l'homme de métier et relatif aux couches physiques, MAC et applicatives du système OSI, spécifiés par exemple dans les normes SIGFOX ou IEEE 802.15.4.

Selon l'invention, le fournisseur de service ne déploie pas sa propre infrastructure de collecte, mais utilise le service de moteur de recherche spectrale mis en place par l'Odl. Les équipements de réception ER1 à ERN déployés par l'Odl sont adaptés pour recevoir les signaux radio porteurs des données de mesures transmises par les capteurs C1 à CM selon le protocole de communication employé par les capteurs, à les convertir en échantillons numérisés, à les indexer en fonction du lieu, de l'instant et de leur fréquence de réception et à transmettre les échantillons indexés sous forme de trames d'échantillons à la base de données BDD en vue de leur stockage.

Dans cet exemple, l'utilisateur de l'équipement terminal ET est le fournisseur de services auquel s'est adressé le client métier en charge d'exploiter les mesures de grandeurs physiques des capteurs déployés sur une zone géographique donnée.

Dans un premier temps, le client métier formule ses besoins au fournisseur de services qui n'a plus qu'à les traduire sous la forme d'un ensemble de requêtes de recherche adaptées et exploitables par le serveur d'interrogation SI.

A titre d'exemple, si le client métier souhaite obtenir les échantillons correspondant à une sous-bande spectrale [B1,B2] donnée, reçus pendant une période de temps passée [date1, date2] sur les sites S1 et S2, le fournisseur de services en déduit immédiatement la requête à formuler au serveur d'interrogation : *Req([date 1, date 2], (x1, y1), (x2, y2), [B1,B2])*

Si le client métier CM souhaiter obtenir en continu les échantillons reçus dans une sous-bande [B1,B2] sur une région géographique donnée, déterminée par son centre (x0, y0) et un rayon r, le fournisseur de services va d'abord déterminer tous les sites contenus dans la région spécifiée. Il s'appuie pour ce faire sur l'hypothèse d'un rayon de réception par site calcule un facteur de recouvrement de surface géographique et détermine ensuite un sous-ensemble des sites S1 à SN permettant d'obtenir le facteur de recouvrement ciblé. La période de temps continue peut être exprimée de la façon suivante : [date1=0, date2=infini].

Les exemples de requêtes qui viennent d'être cités illustrent les critères de recherche de premier niveau. Bien sûr, en fonction des besoins formulés par le client métier, le fournisseur de service peut être amené à leur ajouter des critères de recherche de deuxième niveau, spécifiant par exemple une signature électromagnétique des échantillons à rechercher ou des critères de traitement précisant un prétraitement à appliquer aux échantillons par le serveur d'interrogation SI avant leur envoi à l'équipement terminal ET.

Une fois qu'il a obtenu les échantillons correspondant à sa ou ses requêtes du moteur de recherche spectral, le fournisseur de service pourra, si besoin, les soumettre à un traitement de signal et protocolaire adapté afin d'en extraire les données de mesure requises par le client métier.

Ainsi, avec l'invention, le fournisseur de services peut se « construire » une infrastructure de collecte de mesures sur la base d'un ensemble de requêtes soumises au moteur de recherche spectral opéré par l'opérateur d'infrastructures Odl, sans investir dans une infrastructure de collecte dédiée.

Dans la description qui précède on peut noter que la bande utilisée peut aussi être une bande avec licence.

Bien sûr, l'invention ne se limite pas à la collecte de données de mesures. L'exemple qui va suivre illustre le fait que l''invention permet aussi de déployer d'autres types de service.

### Estimation de la température d'interférences d'une bande de fréquences libres

Aujourd'hui, un acteur M2M, client métier, fournisseur de services ou opérateur d'infrastructure, qui propose un service opérant sur une bande sans licence n'a pas de garantie sur le bon fonctionnement immédiat ou à long terme de ce service. En effet, une bande sans licence est par nature partagée entre tous les utilisateurs qui veulent l'utiliser, dans la limite des contraintes réglementaires, relatives par exemple à la puissance d'émission et au facteur d'activité. Elle voit cohabiter sur une multitude de systèmes radio ayant des caractéristiques différentes, en termes de largeur de bande, type de modulation, etc. La charge de cette bande est donc dépendante de son utilisation sur la zone géographique considérée. Une telle charge peut ainsi s'avérer compatible avec le déploiement d'un nouveau service ou au contraire trop élevée pour que ce nouveau service puisse atteindre le niveau de performance requis.

Le taux d'occupation de la bande d'une zone géographique est donc un paramètre clé pour un acteur M2M. Pour l'obtenir, il doit procéder à une mesure exhaustive (au mieux) du niveau de champ sur la bande sur la zone géographique à couvrir. Pour être représentative, cette mesure doit être faite sur les points hauts pouvant héberger une passerelle de collecte de la zone de couverture et sur une durée représentative, par exemple de plusieurs jours. C'est une entreprise extrêmement longue, fastidieuse et coûteuse.

Avec l'invention, la pluralité d'équipement de numérisation de spectre déployés sur une zone géographique fournit une solution pour obtenir une mesure fiable du taux d'occupation de la bande sur cette zone géographique et ainsi un moyen d'anticiper que le service à déployer pourra fonctionner correctement du point de vue radio. De plus, la mesure de l'occupation du spectre peut être faite avec une résolution spatiale importante, ce qui permet de mettre en oeuvre des stratégies de planification fine des fréquences à utiliser. Au-delà d'une température moyenne d'interférence de la bande, l'analyse de cette mesure peut permettre à l'opérateur de service en question d'identifier par exemple des sous-bandes peu occupées et donc plus propice pour le choix de la fréquence centrale et de la largeur de bande à utiliser. Elle peut donner une image de l'occupation temporelle de la bande permettant de choisir des instants d'émission plus favorables pour le service à déployer.

Concrètement, l'acteur M2M qui veut effectuer une campagne de mesure de l'occupation spectrale doit simplement formuler auprès du moteur de recherche spectral un ensemble des requêtes qui ciblent les régions géographiques voulues, les bandes de fréquences d'intérêt et les périodes durant lesquels l'échantillonnage doit être effectué. Ensuite, à partir des échantillons numérisés obtenus, un calcul de température d'interférence est effectué de la façon suivante :

La température d'interférence d'une bande fréquence peut être représentée comme une fonction de la localisation, de la fréquence et du temps :

$$IT = f(x, y, freq, temps)$$

Des exemples détaillés d'une telle fonction sont bien connus de l'homme de métier et sont explicités dans la littérature.

Il s'agit donc d'un calcul en 4 dimensions, représentable comme un graphe animé.

Ce traitement peut être mis en oeuvre par l'équipement terminal, en guise de post-traitement, ou bien directement à la volée par le serveur d'interrogation SI, comme un prétraitement avant l'envoi de l'ensemble d'échantillons dans le message de réponse à la requête de l'équipement terminal ET. Dans ce deuxième cas, l'opérateur d'infrastructure Odl fournit directement à l'utilisateur requérant, fournisseur de services ou client métier, le résultat du calcul de température d'interférence en tant que service.

Au vu des deux exemples qui viennent d'être présentés, il apparaît que l'invention procure à l'opérateur d'infrastructure qui implémente l'invention au moins 2 avantages :

- anticiper le bon ou mauvais fonctionnement d'un service à déployer,
- exploiter commercialement ce dispositif en fournissant la mesure brute et/ou l'analyse temps/fréquence de l'occupation de la bande à exploiter.

L'exemple qui va suivre montre que l'invention trouve encore d'autres applications, notamment à des fins de régulation du spectre électromagnétique.

### « Régulation - police du spectre »

L'autorité de régulation du spectre électromagnétique d'un pays peut avantageusement s'appuyer sur l'existence du moteur de recherche spectral selon l'invention pour obtenir des échantillons du spectre et vérifier à partir de ces échantillons que les règles établies sur les bandes de fréquence concernées sont bien respectées. Il lui suffit donc de traduire son plan de mesures de l'activité électromagnétique de la bande spectrale considérée en un ensemble de requêtes à transmettre au moteur de recherche spectral et de soumettre les échantillons numérisés obtenus aux traitements appropriés. A partir des échantillons numérisés obtenus, il lui est en effet possible de d'identifier des anomalies soit au niveau de la puissance radio reçue, soit au niveau du facteur d'activité, qui indiqueraient des émissions potentiellement en effraction des règles établies sur les bandes de fréquences concernées.

Parmi les traitements appropriés à appliquer aux échantillons, il est important d'estimer les puissances d'émission des émetteurs de signaux radio à partir des puissances de réception calculées pour les échantillons numérisés stockés dans la base de données. L'infrastructure envisagée par l'invention (avec de multiples sites synchronisés dans le temps) permet justement d'effectuer de la localisation des émissions par triangulation et donc d'extrapoler une estimation de puissance d'émission à partir d'une puissance de réception.

A titre d'exemple non limitatif, des traitements par ondelettes couplés à une localisation des émissions par triangulation (puisque une émission peut être captée par plusieurs sites de réception) peuvent être effectués pour davantage préciser la vérification de la conformité des émissions aux règles.

Enfin, dans une optique de faciliter la vérification de conformité des émissions sur le terrain il serait envisageable que le régulateur impose aux utilisateurs d'une bande de fréquences d'utiliser une structure de trame spécifique contenant des marqueurs de début et fin de trame modulés selon une forme d'onde spécifique contenant des informations d'identification des équipements radio émetteurs pour ainsi pouvoir délimiter facilement dans le temps les trames reçues et ainsi déduire des informations sur le facteur d'activité, la puissance d'émission etc, par trame et par équipement.

**Revendications**

1. Procédé d'obtention d'échantillons numérisés de signaux radio reçus sur une bande spectrale déterminée par une pluralité d'équipements de réception (ER$_1$, ER$_N$) connectés à un réseau de communication (RC) et partageant un référentiel spatial, temporel et fréquentiel commun, ledit procédé étant **caractérisé en ce qu'il** comprend les étapes suivantes :

   - émission (E1) d'un message de requête (Req) de recherche d'échantillons numérisés à destination d'un serveur d'interrogation (SI) d'une base de données (BD) dudit réseau, ladite base étant apte à stocker une pluralité d'échantillons numérisés transmis par ladite pluralité d'équipements de communication à ladite base de données, un échantillon numérisé étant indexé par au moins un index de temps, un index de localisation géographique et un index de fréquence, ladite requête comprenant au moins des critères de recherche de premier niveau, lesdits critères comprenant au moins un critère de temps, un critère de localisation géographique et un critère de fréquence;
   - réception (E2) d'un message de réponse (Rep) à ladite requête, comprenant les échantillons numérisés dont les index associés satisfont les critères de recherche de ladite la requête.

2. Procédé d'obtention d'échantillons numérisés reçus par une pluralité d'équipements de réception selon la revendication **1, caractérisé en ce que** le message de requête transmis au serveur d'interrogation comprend en outre au moins un critère de recherche de deuxième niveau, destiné à déclencher la mise en oeuvre d'une sélection par le serveur d'interrogation des échantillons numérisés dont les index associés satisfont les critères de recherche de premier niveau, en fonction dudit au moins un deuxième critère et **en ce que** le message de réponse comprend les échantillons sélectionnés.

3. Procédé d'obtention d'échantillons numérisés reçus par une pluralité d'équipements de réception selon l'une au moins des revendications **1** et **2, caractérisé en ce que** le message de requête transmis au serveur d'interrogation comprend en outre au moins une commande de prétraitement, destiné à déclencher la mise en oeuvre par le serveur d'interrogation d'au moins un prétraitement des échantillons numérisés dont les index associés satisfont les critères de recherche de la requête et **en ce que** le message de réponse reçu comprend les échantillons prétraités.

4. Procédé de traitement d'une requête de recherche de signaux radio reçus par une pluralité d'équipements de réception radio (ER$_1$, ER$_N$) connectés à un réseau de communication (RC) et partageant un référentiel spatial, temporel et fréquentiel commun, ladite requête étant reçue d'un équipement terminal (ET) connecté audit réseau, ledit procédé étant **caractérisé en ce qu'il** comprend les étapes suivantes :

   - réception (I1) d'un message de requête de recherche d'échantillons desdits signaux, ladite requête comprenant au moins des critères de recherche de premier niveau, lesdits critères comprenant au moins un critère de temps, un critère de localisation géographique et un critère de fréquence;
   - interrogation (I3) à partir desdits critères de premier niveau d'une base de données apte à stocker une pluralité d'échantillons numérisés

obtenus par ladite pluralité d'équipements de communication à partir de signaux radio reçus sur une bande spectrale prédéterminée et stockés dans ladite base de données, un échantillon numérisé étant indexé par au moins un index de temps, un index de localisation géographique et un index de fréquence;

- obtention (I4) d'un ensemble d'échantillons satisfaisant au moins lesdits critères de recherche de premier niveau; et

- émission (I7) d'un message de réponse comprenant au moins un sous-ensemble dudit ensemble d'échantillons obtenu audit équipement terminal (ET).

**5.** Procédé de traitement d'une requête de recherche selon la revendication **4, caractérisé en ce que**, le critère de temps comprenant une condition temporelle de début de période et une condition temporelle de fin de période, ledit procédé comprend une étape de vérification desdites conditions destinée à déclencher l'étape d'interrogation dès que la condition temporelle de début est satisfaite et tant que la condition temporelle de fin de période n'est pas satisfaite.

**6.** Procédé de traitement d'une requête de recherche selon l'une des revendications **4** et **5, caractérisé en ce que**, ladite requête (Req) comprenant en outre au moins un critère de recherche de deuxième niveau, ledit procédé comprend une étape de sélection (I5) d'un sous-ensemble de l'ensemble d'échantillons satisfaisant les critères de recherche de premier niveau, en fonction dudit critère de recherche de deuxième niveau et **en ce que** le message de réponse (Rep) émis comprend ledit sous-ensemble.

**7.** Procédé de traitement d'une requête de recherche selon la revendication **6, caractérisé en ce que** ledit au moins un critère de recherche de deuxième niveau comprend au moins une sous-bande de ladite au moins une bande spectrale numérisée par la pluralité d'équipements de réception et **en ce que** l'étape de sélection (I5) consiste à appliquer une convolution réalisant un filtrage des échantillons obtenus à partir des critères de premier niveau et correspondant à ladite au moins une sous-bande.

**8.** Procédé de traitement d'une requête de recherche selon la revendication **6, caractérisé en ce que** ledit au moins un critère de recherche de deuxième niveau spécifie au moins une signature électromagnétique, **en ce que** l'étape de sélection comprend une sous-étape de corrélation temporelle d'une séquence des échantillons obtenus avec une séquence d'échantillons de référence représentative de ladite signature destinée à fournir un taux de corrélation des échantillons et une sous-étape de comparaison du taux de corrélation fourni avec un seuil de corrélation prédéterminé.

**9.** Procédé de traitement d'une requête de recherche selon la revendication **8, caractérisé en ce que**, ladite requête comprenant en outre un identifiant de l'équipement terminal émetteur, ledit procédé comprend en outre une étape (I2) de contrôle d'accès destinée à contrôler que ledit identifiant est autorisé à accéder aux échantillons présentant ladite signature électromagnétique.

**10.** Procédé de traitement d'une requête de recherche selon l'une des revendications **4** à **9, caractérisé en ce que** ladite requête comprend en outre une commande de prétraitement, comprenant des instructions de programme écrites dans un langage exécutable et **en ce que** ledit procédé comprend une étape (I6) de prétraitement de l'ensemble d'échantillons satisfaisant les critères de recherche de la requête et destinée à exécuter lesdites instructions l'exécution desdites instructions de programme.

**11.** Procédé de traitement d'un signal radio (Sa) reçu par un équipement de réception radio (ER$_1$, ER$_N$) apte à recevoir des signaux radio sur une bande spectrale déterminée, ledit équipement étant connecté à un réseau de communication (RC), **caractérisé en ce qu'il** comprend les étapes suivantes :

- Conversion (T2) du signal radio reçu à un instant de réception en échantillons numérisés ;
- Indexation (T3) des échantillons numérisés en associant à un échantillon au moins un index de temps représentatif dudit instant de réception, un index de localisation géographique représentatif d'une position géographique de l'équipement de réception et un index de fréquence représentatif de ladite bande spectrale ;
- Stockage (T5) des échantillons indexés dans une base de données (BD) dudit réseau.

**12.** Dispositif (100) d'obtention d'échantillons numérisés de signaux radio reçus par une pluralité d'équipements de communication déployés sur une zone géographique, **caractérisé en ce qu'il** comprend les modules suivants :

- Emission (REQ) d'un message de requête de recherche desdits signaux radio dans une base de données dudit réseau, apte à stocker une pluralité d'échantillons numérisés, obtenus par ladite pluralité d'équipements de communication à partir de signaux radio reçus sur une bande spectrale déterminée et transmis à ladite base de données, un échantillon numérisé étant indexé par au moins un index de temps et un index de localisation géographique et un index de fréquence, ladite requête comprenant au moins des critères de recherche de premier niveau des échantillons recherchés parmi lesquels au moins un critère de temps, un critère de localisation géographique et un critère de fréquence;

- réception (REC) d'un message de réponse à ladite requête, comprenant les échantillons numérisés dont les index associés satisfont lesdits critères.

13. Equipement terminal (ET) d'un utilisateur, apte à se connecter à un réseau de communication comprenant une pluralité d'équipements de communication déployés sur une zone géographique et aptes à recevoir des signaux radio, **caractérisé en ce que** ledit équipement terminal comprend un dispositif d'obtention d'échantillons numérisés selon la revendication **12.**

14. Dispositif (200) de traitement d'une requête de recherche d'échantillons numérisés de signaux radio reçus sur une bande spectrale déterminée par une pluralité d'équipements de réception d'un réseau de communication, ladite requête étant reçue d'un équipement terminal connecté audit réseau, ledit procédé étant **caractérisé en ce qu'il** comprend les étapes suivantes :

- réception (REC) d'un message de requête de recherche d'échantillons desdits signaux, ladite requête comprenant au moins des critères de recherche de premier niveau des échantillons recherchés comprenant au moins un critère de temps, un critère de localisation géographique et un critère de fréquence;
- interrogation (INT) d'une base de données apte à stocker une pluralité d'échantillons transmis par la pluralité d'équipements de communication, un échantillon stocké étant associé à des index comprenant au moins un index de temps, un index de localisation géographique et un index de fréquence ;
- obtention (GET) d'un ensemble d'échantillons stockés satisfaisant lesdits critères de recherche de premier niveau, et
- émission (SEND) d'un message de réponse comprenant au moins un sous-ensemble dudit ensemble d'échantillons audit équipement terminal audit équipement terminal.

15. Serveur d'interrogation (SI) d'une base de données d'un réseau de communication, comprenant une pluralité d'équipements de réception radio (ER$_1$ à ER$_N$), **caractérisé en ce qu'il** comprend un dispositif de traitement (200) d'une requête de recherche de signaux radio selon la revendication **14.**

16. Dispositif (300) de traitement d'un signal radio reçu par un équipement de communication , **caractérisé en ce qu'il** comprend les modules suivants :

- Conversion (CONV) du signal reçu en une suite d'échantillons numérisés ;
- Indexation (IND) des échantillons de la suite par association d'index comprenant au moins un index de temps, un index de localisation géographique et un index de fréquence ;
- Transmission (SEND) des échantillons indexés en vue de leur stockage dans une base de données.

17. Equipement de réception, apte à recevoir un signal radio sur une bande spectrale déterminée, **caractérisé en ce qu'il** comprend un dispositif (300) de traitement d'un signal radio selon la revendication **16.**

18. Base de données (BDD) d'un réseau de communication comprenant une pluralité d'équipements de communication radio, **caractérisée en ce qu'**elle comprend :

- un module de stockage (STOR) d'une pluralité d'échantillons numérisés obtenus à partir de signaux radio reçus sur une bande spectrale déterminée et transmis à ladite base de données par ladite pluralité d'équipements de communication, un échantillon numérisé étant indexé par au moins un index de temps et un index de localisation géographique et un index de fréquence,
- un module de traitement (PROC) d'une requête de recherche d'échantillons comprenant au moins des critères de recherche de premier niveau des échantillons recherchés comprenant au moins un critère de temps, un critère de localisation géographique et un critère de fréquence, apte à fournir un ensemble d'échantillons satisfaisant lesdits critères en réponse à ladite requête.

19. Système (S) d'obtention d'échantillons numérisés de signaux radio reçus dans une zone géographique (ZG) par une pluralité de d'équipements de réception (ER$_1$, ER$_N$) conformes à la revendication **17,** un serveur d'interrogation (SI) d'une base de données conforme à la revendication **15,** une base de données (BD) conforme à la revendication **18** et au moins un équipement terminal (ET) conforme à la revendication **13.**

20. Programme d'ordinateur (Pg1, Pg2, Pg3) comprenant des instructions pour la mise en oeuvre d'un procédé selon les revendications **1** à **11,** lorsqu'il exécuté par un processeur.

**FIG. 1**

**FIG. 2**

**FIG. 9**

**FIG. 3**

**FIG. 4**

**FIG. 5**

**FIG. 6**

**FIG. 7**

**FIG. 8**

**FIG. 10**

Europäisches
Patentamt

European
Patent Office

Office européen
des brevets

**RAPPORT DE RECHERCHE EUROPEENNE**

Numéro de la demande

EP 13 18 9610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/073983 A1 (DIENER NEIL R [US]) 7 avril 2005 (2005-04-07) * figures 1, 3, 8 * * alinéas [0007], [0011], [0026] * * alinéas [0035], [0045], [0091] * * alinéa [0137] * | 1-20 | INV. H04W4/00 H04W28/16 ADD. H04W16/00 H04W16/14 |
| X | WO 2008/039872 A2 (QUALCOMM INC [US]; NANDA SANJIV [US] QUALCOMM INC [US]; NANDA SANJIV []) 3 avril 2008 (2008-04-03) * alinéas [0006], [0019], [0026]; figure 1 * * alinéa [0036] - alinéa [0039] * * alinéa [0052] - alinéa [0055]; figures 6, 7 * | 1-20 | |
| A | US 2009/319551 A1 (JUNG EDWARD K Y [US] ET AL) 24 décembre 2009 (2009-12-24) * le document en entier * | 1-20 | |

DOMAINES TECHNIQUES RECHERCHES (IPC)

H04W

Le présent rapport a été établi pour toutes les revendications

| Lieu de la recherche | Date d'achèvement de la recherche | Examinateur |
|---|---|---|
| Munich | 3 février 2014 | Petit, Sebastian |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 18 9610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-02-2014

| Document brevet cité au rapport de recherche | Date de publication | Membre(s) de la famille de brevet(s) | Date de publication |
|---|---|---|---|
| US 2005073983 A1 | 07-04-2005 | US 2005073983 A1<br>US 2006274684 A1<br>WO 2006020405 A2 | 07-04-2005<br>07-12-2006<br>23-02-2006 |
| WO 2008039872 A2 | 03-04-2008 | BR PI0717229 A2<br>CA 2662448 A1<br>CN 101518119 A<br>CN 102740323 A<br>CN 102740324 A<br>EP 2074849 A2<br>EP 2077682 A1<br>JP 2010505370 A<br>JP 2013034210 A<br>KR 20090053948 A<br>RU 2009115651 A<br>RU 2011135102 A<br>TW 200825994 A<br>US 2008076450 A1<br>WO 2008039872 A2 | 08-10-2013<br>03-04-2008<br>26-08-2009<br>17-10-2012<br>17-10-2012<br>01-07-2009<br>08-07-2009<br>18-02-2010<br>14-02-2013<br>28-05-2009<br>10-11-2010<br>27-02-2013<br>16-06-2008<br>27-03-2008<br>03-04-2008 |
| US 2009319551 A1 | 24-12-2009 | AUCUN | |

EPO FORM P0460

Pour tout renseignement concernant cette annexe : voir Journal Officiel de l'Office européen des brevets, No.12/82